# DEMANDE DE BREVET EUROPEEN

(11) **EP 0 947 677 A1**
(43) Date de publication de la demande: **06.10.1999**
(21) Numéro de dépôt: 99400617.9
(22) Date de dépôt: 12.03.1999
(51) Int. Cl.: F02B 23/06, F02F 3/26

(54) **Chambre de combustion et moteur à combustion interne**

(30) Priorité: 31.03.1998 FR 9803986
(71) Demandeur: RENAULT, 92109 Boulogne-Billancourt (FR)
(72) Inventeur: Mathevet, Xavier, 75012 Paris (FR)
(74) Mandataire: Fernandez, Francis

(57) **Abrégé**

Chambre de combustion de moteur à combustion interne comprenant au moins un déviateur 2 apte à s'opposer au mouvement d'un fluide dans ladite chambre selon au moins une direction, et moteur à combustion interne équipé d'une telle chambre.

## Description

La présente invention relève du domaine des chambres de combustion pour moteur à combustion interne, notamment des moteurs à injection directe. Une chambre de combustion est formée entre la face supérieure d'un piston et l'extrémité supérieure d'un cylindre.

On cherche généralement à réduire la consommation des moteurs et à réduire l'émission de polluants tels que des hydrocarbures imbrûlés. De telles améliorations peuvent être effectuées en agissant sur la qualité du mélange entre l'air et le carburant.

Dans le cas d'un moteur à injection directe, trois phénomènes principaux, combinés, permettent le mélange air-carburant :
- la pulvérisation,
- le mouvement (dit "swirl") de la charge d'air autour de l'axe cylindrique ou d'un axe représentant l'axe d'inertie de la chambre de combustion,
- l'effet de chasse (dit "squio") de l'air entre le dessus du piston et la culasse.

En dehors de la pulvérisation qui émane des caractéristiques de l'injection, l'action des deux mouvements turbulents a lieu à la paroi de la chambre de combustion et les conditions aérodynamiques ne sont bonnes que pour les régimes intermédiaires, par exemple de l'ordre de 2000 à 2500 tours/minutes.

En deçà, la turbulence est trop faible et il y a un risque d'impact du jet de carburant sur la paroi de la chambre de combustion, surtout si on utilise des pressions d'injections élevées. Il en résulte une création importante de particules et d'oxyde d'azote. Au-delà des régimes intermédiaires, le mouvement de rotation est trop important et il y a risque de recouvrement du ou des jets de carburant se traduisant également par l'émission de particules.

L'invention propose d'améliorer la turbulence à faible régime , d'éviter le recouvrement de jets à régime élevé et de réduire la concentration locale en carburant en améliorant sa répartition dans la chambre de combustion par un meilleur taux d'occupation des micro-gouttelettes de carburant.

La chambre de combustion de moteur à combustion interne, selon l'invention, comprend au moins un déviateur apte à s'opposer au mouvement d'un fluide dans ladite chambre selon au moins une direction. Le déviateur qui provoque une modification de la trajectoire du ou des jets de carburant améliore la turbulence et par conséquent la combustion.

Dans un mode de réalisation de l'invention, le déviateur se présente sous la forme d'une protubérance formée sur une paroi de ladite chambre, par exemple sur une paroi cylindrique ou sur une surface d'un piston du moteur. Dans ce dernier cas, la protubérance peut être formée sur une surface concave du piston.

Dans un mode de réalisation de l'invention, le déviateur est apte à s'opposer au mouvement circulaire d'un fluide.

Dans un mode de réalisation de l'invention, le déviateur est apte à s'opposer au mouvement axial d'un fluide, l'axe de référence étant l'axe du cylindre du moteur.

Le déviateur peut être apte à dévier le mouvement d'un fluide vers le centre de ladite chambre.

Avantageusement, le déviateur comprend des aspérités pour former une couche limite à proximité des parois de la chambre.

Dans un mode de réalisation de l'invention, chaque déviateur est disposé sur la trajectoire d'un jet de fluide et les jets de fluide sont alternativement déviés et non déviés. On dispose ainsi un déviateur pour deux jets de fluide.

La présente invention a également pour objet un moteur à combustion interne équipé d'une chambre telle que décrit précédemment.

On parvient ainsi, en évitant à la fois l'impact d'un jet sur une paroi de la chambre de combustion et un mouvement de rotation turbulent trop important à améliorer la combustion aussi bien à faible régime qu'à haut régime.

La présente invention sera mieux comprise à l'étude de la description détaillée de quelques modes de réalisation pris à titre d'exemples nullement limitatifs et illustrés sur les dessins annexés, sur lesquels :
la figure 1 est une vue schématique partielle de la paroi d'un cylindre pourvue de déviateurs de jet selon l'invention ;
la figure 2 est une vue schématique en coupe axiale d'un piston conforme à l'invention ; et
la figure 3 est une variante de la figure 2.

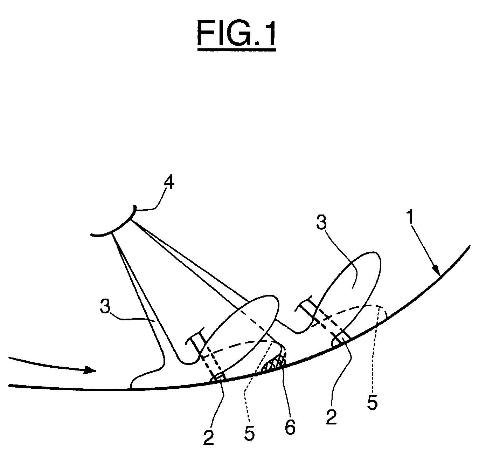

Comme on peut le voir sur la figure 1, le cylindre comprend une paroi circulaire concave 1 qui constitue une paroi de la chambre de combustion et sur laquelle sont disposés deux déviateurs de jet 2 sous la forme de barrettes axiales de faible hauteur, régulièrement réparties circonférentiellement, et prévues pour dévier les jets de carburant dont la trajectoire est représentée et référencée 3 qui proviennent de l'injecteur 4.

Pour une meilleure compréhension du fonctionnement des déviateurs 2, on a représenté en pointillés et référencé 5 la trajectoire des jets de carburant en l'absence de déviateur. On voit que les jets 5 non déviés tendent à s'étaler le long de la paroi 1 et se recouvrent partiellement dans la zone référencée 6 représentée en grisée. La zone 6 est excessivement riche en carburant ce qui ce traduit par une mauvaise combustion et l'émission de particules et d'hydocarbures imbrûlés néfastes pour l'environnement. Les jets tendent à s'étaler de façon inégale par rapport au point d'impact sur la paroi 1 en raison du fort mouvement d'air, par exemple circulaire, présent dans la chambre et illustré par la flèche.

Au contraire, les jets déviés 3 ne se recouvrent pas au moment de la combustion d'où une meilleure répartition des micro-gouttelettes de carburant dans la chambre de combustion et un meilleur rendement du moteur. La partie déviée du jet 3 peut être décalée dans l'espace par rapport à la partie non déviée du jet 3 voisin pour éviter leur recouvrement.

Bien entendu, on pourrait prévoir des déviateurs 2 de forme légèrement différente par exemple hélicoïdale pour dévier le jet à la fois dans le sens circonférenciel et dans le sens axial. Le nombre de déviateurs 2 à prévoir dépend du nombre de jets de carburant et leur forme dépend de la déviation et/ou de la turbulence souhaitée.

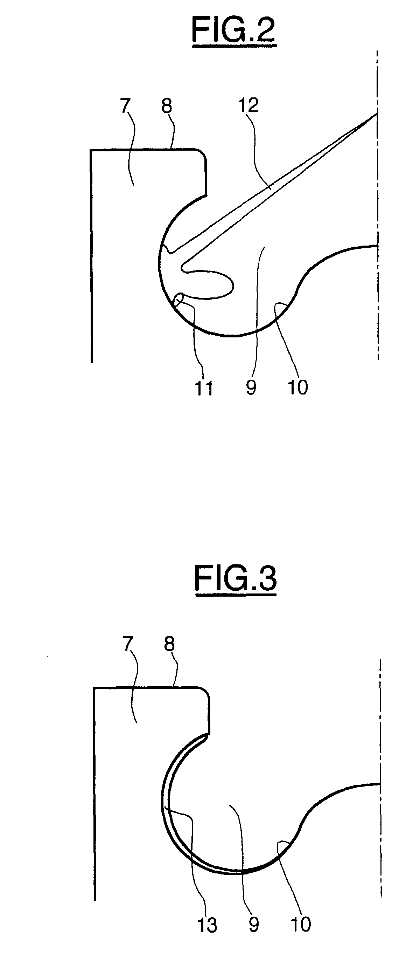

Sur la figure 2, on voit qu'un piston 7 du moteur est pourvu d'une face supérieure 8 creuse formant une chambre de combustion 9. La chambre de combustion 9 est pourvue d'une paroi circulaire 10 sur laquelle est formé un déviateur circulaire 11 disposé sur la trajectoire du jet 12 en aval de sa zone d'impact sur la paroi 10 et modifiant le mouvement axial turbulent du jet 12 en le ramenant vers l'axe du piston 7. Un déviateur de ce type permet, dans les chambres de combustion peu profondes formées dans un piston, de dévier une partie du jet vers le centre de la chambre de combustion et évite une concentration trop importante de carburant, c'est-à-dire une zone de richesse élevée provoquant une combustion incomplète.

Le piston 7 de la figure 3 est de type semblable à celui de la figure 2, à ceci prêt que le déviateur 13 se présente sous la forme d'une nervure disposée dans un plan passant par l'axe du piston 7 et s'opposant ainsi aux mouvements turbulents de rotation dans la chambre de combustion 9. Le jet peut être envoyé perpendiculairement à sa zone d'impact. Il sera entrainé en rotation et/ou en translation par le mouvement d'air et dévié par le déviateur 13. Un déviateur transversal de ce type réduit le risque de recouvrement des jets, améliore la turbulence locale ainsi que le taux d'occupation du carburant dans la chambre de combustion 9, par réduction des zones de richesse élevée.

On pourrait aussi prévoir un déviateur 13 disposé dans un plan parallèle à l'axe du piston mais ne passant pas par celui-ci de façon à avoir également un effet sur le mouvement axial des fluides présents dans la chambre de combustion.

Avec l'un des types de déviateurs précédemment illustrés, il peut s'avérer intéressant de ne dévier qu'un partie des jets de carburant, par exemple un jet sur deux. Les déviateurs peuvent également se présenter sous la forme de nervures discontinues, de picots qui permettent d'augmenter la turbulence locale. On peut également prévoir de jouer sur la rugosité des parois de la chambre de combustion au moyen de striures qui permettent de créer une couche limite importante à proximité de ladite paroi de la chambre de combustion.

Ces différents modes de réalisation de l'invention sont particulièrement adaptés aux moteurs à injection directe, diesel ou essence.

## Revendications

1. Chambre de combustion de moteur à combustion interne, caractérisée par le fait qu'elle comprend au moins un déviateur (2) apte à s'opposer au mouvement d'un fluide dans ladite chambre selon au moins une direction.

2. Chambre selon la revendication 1, caractérisée par le fait que le déviateur se présente sous la forme d'une protubérance formée sur une paroi de ladite chambre.

3. Chambre selon la revendication 2, caractérisée par le fait que la protubérance est formée sur une paroi cylindrique de ladite chambre.

4. Chambre selon la revendication 2, caractérisée par le fait que la protubérance est formée sur une surface d'un piston (7) du moteur.

5. Chambre selon la revendication 4, caractérisée par le fait que la protubérance est formée sur une surface concave du piston.

6. Chambre selon l'une quelconque des revendications précédentes, caractérisée par le fait que le déviateur est apte à s'opposer au mouvement circulaire d'un fluide.

7. Chambre selon l'une quelconque des revendications précédentes, caractérisée par le fait que le déviateur est apte à s'opposer au mouvement axial d'un fluide, l'axe de référence étant l'axe du cylindre du moteur.

8. Chambre selon l'une quelconque des revendications précédentes, caractérisée par le fait que le déviateur comprend des aspérités pour former une couche limite à proximité des parois de la dite chambre.

9. Chambre selon l'une quelconque des revendications précédentes, caractérisée par le fait que chaque déviateur est disposé sur la trajectoire d'un jet de fluide et que les jets de fluide sont alternativement déviés et non-déviés.

10. Moteur à combustion interne équipée d'une chambre selon l'une quelconque des revendications précédentes.
